# EUROPEAN PATENT APPLICATION

(11) **EP 3 872 413 A1**
(43) Date of publication of application: **01.09.2021**
(21) Application number: 21158060.0
(22) Date of filing: 19.02.2021
(51) Int. Cl.: F25B 1/10, F25B 6/04, F25B 9/00, F25B 25/00, F25B 49/02

(54) **REFRIGERATION APPARATUS**

(30) Priority: 25.02.2020 JP 2020029842
(71) Applicant: Panasonic Intellectual Property Management Co., Ltd., Osaka-shi, Osaka 540-6207 (JP)
(72) Inventor: MURASHIMA, Yuichi, OSAKA, 540-6207 (JP); KOSUDA, Osamu, OSAKA, 540-6207 (JP); KIYA, Toyoaki, OSAKA, 540-6207 (JP); MIHARA, Kazuhiko, OSAKA, 540-6207 (JP); KINJO, Kenji, OSAKA, 540-6207 (JP); OINUMA, Toshiyuki, OSAKA, 540-6207 (JP)
(74) Representative: Eisenführ Speiser

(57) **Abstract**

To provide a refrigeration apparatus that can be operated without a shortage of the refrigeration capacity even when a hot water supply temperature is increased. A refrigeration apparatus 1 includes: an intercooler 30 configured to cool a refrigerant discharged from a low-stage compression mechanism 11; a main gas cooler 31 configured to cool the refrigerant discharged from a high-stage compression mechanism 12; an auxiliary gas cooler 32 configured to cool the refrigerant that has passed through the main gas cooler 31; a first refrigerant flow passage switching valve 25 disposed between the high-stage compression mechanism 12 and the main gas cooler 31; a first refrigerant merging point 26 disposed between the main gas cooler 31 and the auxiliary gas cooler 32; and a refrigerant bypass pipe 27 connecting the first refrigerant flow passage switching valve 25 and the first refrigerant merging point 26.

## Description

### BACKGROUND OF THE INVENTION

### Field of the Invention

The present invention relates to a refrigeration apparatus, and more particularly, to a refrigeration apparatus capable of performing exhaust heat recovery by hot water supply.

### Description of the Related Art

Conventionally, for example, many freezing or cold storage showcases have been installed in large stores such as supermarkets, and many refrigeration apparatuses that operate these showcases by using refrigerators have been used.

For example, there is disclosed, as such a refrigeration apparatus, a conventional technique in which a water pipe is connected to an intercooler and a gas cooler in parallel, the intercooler exchanges heat between a coolant supplied to the intercooler and a refrigerant discharged from a low-stage compression mechanism, and the gas cooler exchanges heat between the coolant supplied to the gas cooler and the refrigerant discharged from a high-stage compression mechanism (e.g., refer to Japanese Patent No. 497197).

However, in the above conventional technique, in order to increase a hot water supply temperature, it is necessary to reduce the flow rate of water flowing through the water pipe of the intercooler and the gas cooler. Thus, the reduction in the water flow rate reduces the heat-exchange performance, insufficient heat dissipation of the refrigerant occurs in the intercooler and the gas cooler, and the refrigerant temperature at the outlet side of the gas cooler rises, which disadvantageously results in a shortage of the refrigeration capacity of the refrigeration apparatus. Thus, providing an additional gas cooler makes it possible to cool the refrigerant even with a low water flow rate and perform hot water supply while maintaining a sufficient refrigeration capacity. On the other hand, when hot water supply is not performed, that is, when the refrigeration apparatus is operated as a normal refrigeration apparatus, it is not necessary to reduce the flow rate of water. Thus, water is not passed to the additional gas cooler. However, water remaining inside the additional gas cooler is heated by a high-temperature refrigerant flowing into the additional gas cooler, and the remaining high-temperature water thus flows when hot water supply is performed. Thus, there is a risk of burns.

The present invention has been made in view of the above point, and an object thereof is to provide a refrigeration apparatus that switches an operation mode according to whether hot water supply is performed or not and is capable of safely performing the mode switching.

### SUMMARY OF THE INVENTION

In order to achieve the above object, the present invention provides a refrigeration apparatus configured to cool a refrigerant by heat exchange between the refrigerant and water, the refrigeration apparatus including: a low-stage compression mechanism; a high-stage compression mechanism; an expansion mechanism; an evaporator; a water pipe constituting a flow passage of water for cooling the refrigerant; an intercooler configured to cool the refrigerant discharged from the low-stage compression mechanism; a main gas cooler configured to cool the refrigerant discharged from the high-stage compression mechanism; an auxiliary gas cooler configured to cool the refrigerant that has passed through the main gas cooler; a first refrigerant flow passage switching mechanism disposed between the high-stage compression mechanism and the main gas cooler; a first refrigerant merging point disposed between the main gas cooler and the auxiliary gas cooler; and a refrigerant bypass pipe connecting the first refrigerant flow passage switching mechanism and the first refrigerant merging point.

With this configuration, a high-temperature refrigerant does not flow into the main gas cooler by switching the first refrigerant flow passage switching mechanism to the refrigerant bypass pipe side in a standard mode which does not perform hot water supply, thereby making it possible to prevent a rise in the water temperature inside the main gas cooler.

According to the present invention, a high-temperature refrigerant does not flow into the main gas cooler by switching the first refrigerant flow passage switching mechanism to the refrigerant bypass pipe side in the standard mode which does not perform hot water supply, thereby making it possible to prevent a rise in the water temperature inside the main gas cooler. Thus, since the water temperature inside the main gas cooler does not rise, the temperature of hot water to be supplied when switching to a hot water supply mode is made becomes low, which eliminates the risk of burns and improves safety.

### BRIEF DESCRIPTION OF THE DRAWINGS

Fig. 1 is a refrigerant circuit diagram of a refrigeration apparatus in a first embodiment of the present invention;
Fig. 2 is a block diagram showing a control configuration of the first embodiment;
Fig. 3 is a flowchart showing operation of a standard mode in the first embodiment;
Fig. 4 is a flowchart showing operation of a hot water supply mode in the first embodiment; and
Fig. 5 is a refrigerant circuit diagram of a refrigeration apparatus of a second embodiment.

### DETAILED DESCRIPTION OF THE PREFERRED EMBODIMENTS

A first invention provides a refrigeration apparatus configured to cool a refrigerant by heat exchange between the refrigerant and water, the refrigeration apparatus including: a low-stage compression mechanism; a high-stage compression mechanism; an expansion mechanism; an evaporator; a water pipe constituting a flow passage of water for cooling the refrigerant; an intercooler configured to cool the refrigerant discharged from the low-stage compression mechanism; a main gas cooler configured to cool the refrigerant discharged from the high-stage compression mechanism; an auxiliary gas cooler configured to cool the refrigerant that has passed through the main gas cooler; a first refrigerant flow passage switching mechanism disposed between the high-stage compression mechanism and the main gas cooler; a first refrigerant merging point disposed between the main gas cooler and the auxiliary gas cooler; and a refrigerant bypass pipe connecting the first refrigerant flow passage switching mechanism and the first refrigerant merging point.

With this configuration, a high-temperature refrigerant does not flow into the main gas cooler by switching the first refrigerant flow passage switching mechanism to the refrigerant bypass pipe side in a standard mode which does not perform hot water supply, thereby making it possible to prevent a rise in the water temperature inside the main gas cooler. Thus, since the water temperature inside the main gas cooler does not rise, the temperature of hot water to be supplied when switching to a hot water supply mode is made becomes low, which eliminates the risk of burns.

In a second invention, the water pipe includes: a first water pipe; a first branch point where the first water pipe branches midway; a first merging point; a second water pipe connecting the first branch point and the first merging point through the auxiliary gas cooler; a third water pipe connecting the first branch point and the first merging point through the intercooler without merging with the second water pipe; a fourth water pipe connecting the first merging point and the main gas cooler; a hot water supply pipe connecting the main gas cooler and a hot water supply destination; a drain pipe connected to the fourth water pipe; a water feeding mechanism disposed in a midway part of the water pipe; a first flow regulating mechanism configured to regulate a flow rate of water flowing to the main gas cooler and the drain pipe; and a control unit configured to control the first flow regulating mechanism.

With this configuration, it is possible to feed water to the auxiliary gas cooler and the intercooler in parallel, and water that has passed through the auxiliary gas cooler and water that has passed through the intercooler merge again and flow to the main gas cooler. Thus, a water passage that is the same as a water passage of a conventional refrigeration apparatus can be formed in the standard mode by providing the first flow regulating mechanism upstream of the main gas cooler. Furthermore, in the standard mode, the refrigeration capacity and efficiency are not reduced and water pressure loss can be reduced.

In a third invention, the water pipe includes: a first water pipe connected to the auxiliary gas cooler; a sixth water pipe connecting the auxiliary gas cooler and the intercooler; a seventh water pipe connecting the intercooler and the main gas cooler; a hot water supply pipe connecting the main gas cooler and a hot water supply destination; a drain pipe connected to the seventh water pipe; a water feeding mechanism disposed in a midway part of the water pipe; a first flow regulating mechanism configured to regulate a flow rate of water flowing to the main gas cooler and the drain pipe; and a control unit configured to control the first flow regulating mechanism.

With this configuration, the hot water supply temperature can be increased by connecting the auxiliary gas cooler, the intercooler, and the main gas cooler in series and feeding water to the auxiliary gas cooler, the intercooler, and the main gas cooler in this order. Furthermore, the first flow regulating mechanism provided for the main gas cooler prevents water from flowing to the main gas cooler which is unnecessary in the standard mode, and the water pressure loss can thus also be reduced.

In a fourth invention, the refrigeration apparatus further includes: an external heat radiator connected to the drain pipe; a second water merging point disposed on the first water pipe; and a fifth water pipe connecting the external heat radiator and the second water merging point.

With this configuration, water flowing through the drain pipe can be cooled in the external heat radiator, and the cooled water is fed to the auxiliary gas cooler and the intercooler through the water pipe, which makes it possible to reuse water without discarding it and operate the refrigeration apparatus with a reduced amount of water.

Hereinbelow, embodiments of the present invention will be described with reference to the drawings.

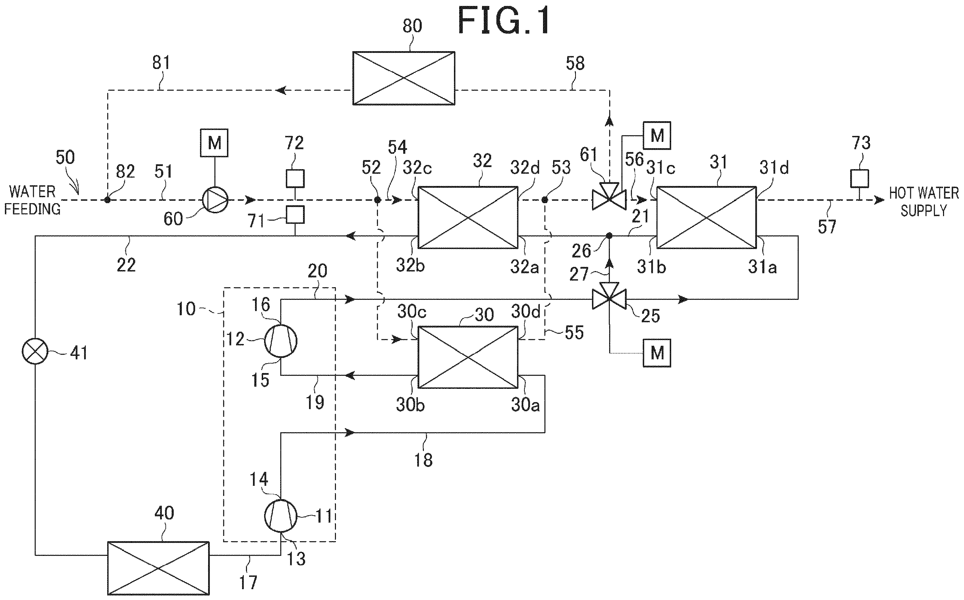

Fig. 1 is a refrigerant circuit diagram showing a refrigeration apparatus according to a first embodiment of the present invention.

As shown in Fig. 1, a refrigeration apparatus 1 is connected to a cooling apparatus that is cooled with a refrigerant fed from the refrigeration apparatus 1, and the cooling apparatus is, for example, a showcase that is installed in a facility such as a convenience store or a supermarket and cools chilled/frozen products displayed in the showcase.

In the present embodiment, the refrigeration apparatus 1 uses, as the refrigerant, carbon dioxide which brings a refrigerant pressure at the high-pressure side (high-pressure side pressure) equal to or higher than a critical pressure (supercritical). The carbon dioxide refrigerant is a natural refrigerant that is environmentally friendly and takes flammability and toxicity into consideration.

The refrigeration apparatus 1 includes a compressor 10. In the present embodiment, the compressor 10 includes two stages of compression mechanisms: a low-stage compression mechanism 11 and a high-stage compression mechanism 12.

Note that although, in the present embodiment, the compressor 10 includes the two stages of compression mechanisms: the low-stage compression mechanism 11 and the high-stage compression mechanism 12, an equal function can be obtained also by using two compressors as a low-stage compressor and a high-stage compressor.

The low-stage compression mechanism 11 is provided with a low-stage suction port 13 and a low-stage discharge port 14, and the high-stage compression mechanism 12 is provided with a high-stage suction port 15 and a high-stage discharge port 16.

A low-pressure refrigerant pipe 17, which is connected to an evaporator 40 of the cooling apparatus, is connected to the low-stage suction port 13, and a low-pressure refrigerant fed from the evaporator 40 of the cooling apparatus through the low-pressure refrigerant pipe 17 is fed to the low-stage compression mechanism 11 through the low-stage suction port 13.

The low-stage compression mechanism 11 compresses the low-temperature and low-pressure refrigerant sucked through the low-stage suction port 13 to increase the pressure thereof up to an intermediate pressure and discharges the refrigerant through the low-stage discharge port 14. The intermediate-pressure refrigerant compressed by the low-stage compression mechanism 11 passes through an intermediate-pressure discharge pipe 18, an intercooler 30, and an intermediate-pressure suction pipe 19, is sucked through the high-stage suction port 15, compressed by the high-stage compression mechanism 12 up to a high pressure, and discharged through the high-stage discharge port 16.

The intermediate-pressure discharge pipe 18, which is connected to the low-stage compression mechanism 11, is connected to an inlet side 30a of one flow passage of the intercooler 30.

The intermediate-pressure suction pipe 19 is connected to an outlet side 30b of the one flow passage of the intercooler 30, and the intermediate-pressure suction pipe 19 is connected to the high-stage suction port 15 of the high-stage compression mechanism 12.

A high-pressure discharge pipe 20 is connected to the high-stage discharge port 16 of the high-stage compression mechanism 12, and the high-pressure discharge pipe 20 is connected to an inlet side 31a of one flow passage of a main gas cooler 31.

An outlet side 31b of the one flow passage of the main gas cooler 31 is connected to an inlet side 32a of one flow passage of an auxiliary gas cooler 32 through a refrigerant pipe 21. An outlet side 32b of the one flow passage of the auxiliary gas cooler 32 is connected to an expansion mechanism 41 of the cooling apparatus through a refrigerant pipe 22. The evaporator 40 is connected to the expansion mechanism 41, and the low-stage compression mechanism 11 is connected to the evaporator 40.

In the present embodiment, the high-pressure discharge pipe 20, which connects the high-stage compression mechanism 12 and the main gas cooler 31, is provided with a first refrigerant flow passage switching valve 25 as the first refrigerant flow passage switching mechanism.

Note that although, in the present embodiment, one three-way valve is used as the first refrigerant flow passage switching valve 25, an equal effect can be obtained also by using two two-way valves as the first refrigerant flow passage switching valve.

Furthermore, the refrigerant pipe 21 between the main gas cooler 31 and the auxiliary gas cooler 32 is provided with a first refrigerant merging point 26, and a refrigerant bypass pipe 27 connects the first refrigerant flow passage switching valve 25 and the first refrigerant merging point 26.

The first refrigerant flow passage switching valve 25 is capable of switching between a flow passage for feeding the refrigerant fed from the high-pressure discharge pipe 20 to the main gas cooler 31 and a flow passage for directly feeding the refrigerant to the auxiliary gas cooler 32 through the refrigerant bypass pipe 27 by bypassing the main gas cooler 31.

A water pipe 50 is connected to the other flow passage of the auxiliary gas cooler 32, the other flow passage of the main gas cooler 31, and the other flow passage of the intercooler 30.

The water pipe 50 includes a first water pipe 51, a first branch point 52 where the first water pipe 51 branches midway, a first merging point 53, a second water pipe 54 which connects the first branch point 52 and the first merging point 53 through an inlet side 32c and an outlet side 32d of the auxiliary gas cooler 32, a third water pipe 55 which connects the first branch point 52 and the first merging point 53 through an inlet side 30c and an outlet side 30d of the intercooler 30 without merging with the second water pipe 54, a fourth water pipe 56 which connects the first merging point 53 and an inlet side 31c of the main gas cooler 31, and a hot water supply pipe 57 which connects an outlet side 31d of the main gas cooler 31 and a hot water supply destination.

As described above, in the present embodiment, the water pipe 50 is configured in such a manner that the second water pipe 54 and the third water pipe 55 are respectively connected to the auxiliary gas cooler 32 and the intercooler 30 in parallel, and the second water pipe 54 connected to the auxiliary gas cooler 32 and the third water pipe 55 connected to the intercooler 30 are connected in series to the main gas cooler 31 through the fourth water pipe 56.

The first water pipe 51 of the water pipe 50 is provided with, for example, a water feeding mechanism 60, such as a water feeding pump.

A first flow regulating valve 61 as the first flow regulating mechanism is disposed in a midway part of the fourth water pipe 56 into which the outlet side of the auxiliary gas cooler 32 and the outlet side of the intercooler 30 are connected and merged. The first flow regulating valve 61 is a three-way valve in the present embodiment, and a drain pipe 58 is connected to a position that is not connected to the water pipe 50.

Note that although, in the present embodiment, a three-way valve is used as the first flow regulating valve 61, an equal function can be obtained also by using two two-way valves as the first flow regulating valve 61.

A refrigerant temperature sensor 71 which detects a refrigerant temperature at the outlet side of the auxiliary gas cooler 32 is disposed at the outlet side of the refrigerant pipe 21 of the auxiliary gas cooler 32. The first water pipe 51 is provided with an inlet-side water temperature sensor 72 which detects the temperature of water entering the auxiliary gas cooler 32 and the intercooler 30, and the hot water supply pipe 57 at the outlet side of the main gas cooler 31 is provided with an outlet-side water temperature sensor 73.

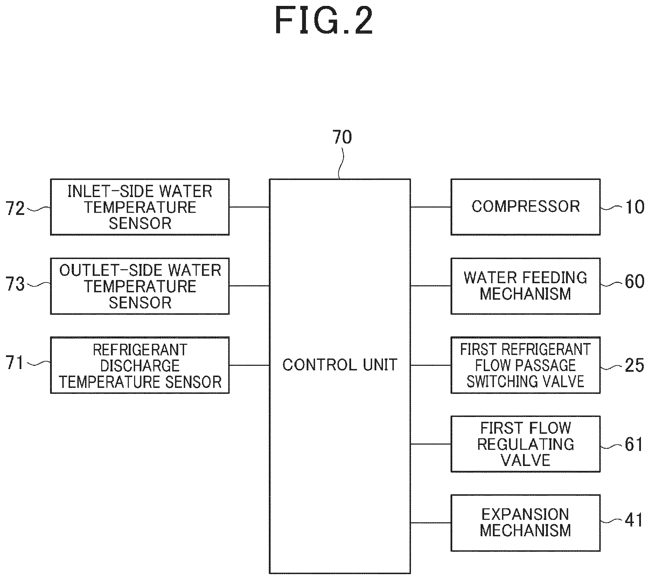

Fig. 2 is a block diagram showing a control configuration of the present embodiment.

As shown in Fig. 2, in the present embodiment, the refrigeration apparatus 1 includes a control unit 70 which performs centralized control of the refrigeration apparatus 1. The control unit 70 controls driving of the compressor 10 and controls the opening degree of the expansion mechanism 41. The control unit 70 is configured to control driving of the water feeding mechanism 60 and the first flow regulating valve 61 on the basis of detection values of the refrigerant temperature sensor 71, the inlet-side water temperature sensor 72, and the outlet-side water temperature sensor 73.

Next, operation of the first embodiment will be described.

First, the compressor 10 is operated to suck, through the low-stage suction port 13 of the low-stage compression mechanism 11, the refrigerant fed from the evaporator 40 of the cooling apparatus, and the sucked refrigerant is compressed to the intermediate pressure by the low-stage compression mechanism 11 and discharged through the low-stage discharge port 14.

The refrigerant discharged through the low-stage discharge port 14 of the low-stage compression mechanism 11 flows into the intercooler 30 through the intermediate-pressure discharge pipe 18. The refrigerant is cooled by exchanging heat with water in the intercooler 30 and returned to the high-stage suction port 15 of the high-stage compression mechanism 12.

The refrigerant returned from the intercooler 30 is compressed by the high-stage compression mechanism 12, discharged through the high-stage discharge port 16, and fed to the main gas cooler 31.

The refrigerant fed from the high-stage compression mechanism 12 exchanges heat with water in the main gas cooler 31, then exchanges heat in the auxiliary gas cooler 32, and is fed to the evaporator 40 through the expansion mechanism 41.

In the present embodiment, the first refrigerant flow passage switching valve 25 disposed between the high-stage compression mechanism 12 and the main gas cooler 31 prevents a high-temperature refrigerant from flowing into the main gas cooler in the standard mode. Thus, water inside the main gas cooler is not heated, and switching to the hot water supply mode can be safely performed.

Note that the standard mode is a mode that only performs cooling of the cooling apparatus without performing hot water supply, while the hot water supply mode performs hot water supply.

In the present embodiment, the water pipe 50 is connected to the auxiliary gas cooler 32 and the intercooler 30 in parallel and then connected in series to the main gas cooler 31.

Thus, water flowing through the water pipe 50 simultaneously flows to the auxiliary gas cooler 32 and the intercooler 30 and then flows to the main gas cooler 31.

Thus, it is possible to reduce the outlet refrigerant temperature of the auxiliary gas cooler 32 and the outlet refrigerant temperature of the intercooler 30 to the vicinity of the incoming water temperature by allowing water to enter the auxiliary gas cooler 32 and the intercooler 30 in parallel.

The main gas cooler 31 and the auxiliary gas cooler 32 make it possible to sufficiently cool the refrigerant even with a low water flow rate.

Furthermore, since the water feeding mechanism 60 can regulate the flow rate of water flowing through the water pipe 50, it is possible to ensure a sufficient refrigeration capacity while performing hot water supply at a predetermined temperature.

Water which is unnecessary can be discharged by using the first flow regulating valve 61. Thus, it is possible to ensure a sufficient flow rate of water flowing into the auxiliary gas cooler 32 and the intercooler 30 while reducing the flow rate of water flowing into the main gas cooler 31. This makes it possible to perform hot water supply with water heated up to the temperature of the refrigerant discharged from the high-stage compression mechanism 12 while ensuring a sufficient refrigeration capacity.

Next, control operation of the first embodiment will be described.

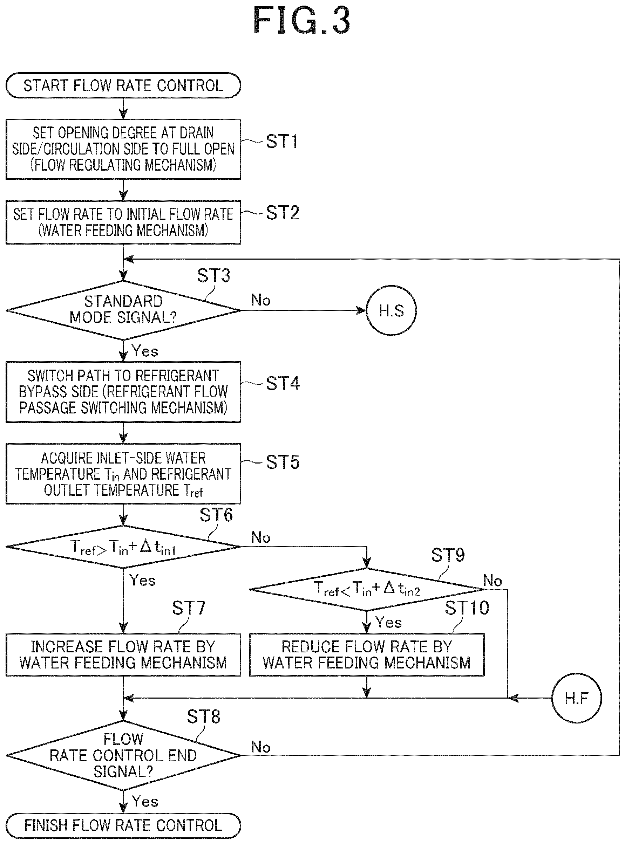

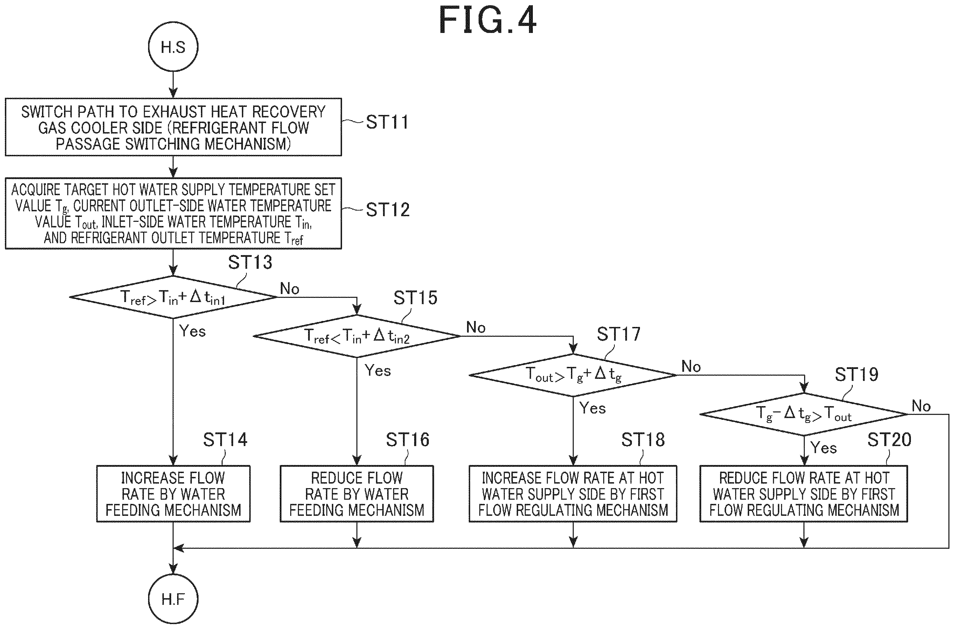

Fig. 3 is a flowchart showing operation of the standard mode of the first embodiment. Fig. 4 is a flowchart showing operation of the hot water supply mode of the first embodiment.

As shown in Fig. 3, when flow rate control of water supply (hot water supply) is performed, the control unit 70 first sets the opening degree of the first flow regulating mechanism to full open (ST1), and sets the flow rate to an initial flow rate and starts operation (ST2).

Then, the control unit 70 determines whether a standard mode signal is present (ST3). When the standard mode signal is present (ST3: YES), the control unit 70 switches the first refrigerant flow passage switching valve 25 to the refrigerant bypass pipe 27 side (ST4).

The control unit 70 acquires an inlet-side water temperature Tin detected by the inlet-side water temperature sensor 72 and a refrigerant outlet temperature Tref detected by the refrigerant temperature sensor 71 (ST5).

Then, the control unit 70 determines whether the refrigerant outlet temperature Tref is higher than the inlet-side water temperature Tin + tin1 (ST6).

When it is determined that the refrigerant outlet temperature Tref is higher than the inlet-side water temperature Tin + tin1 (ST6: YES), the control unit 70 performs control to increase the flow rate regulated by the water feeding mechanism 60 (ST7).

Then, until a flow rate control end signal is input (ST8: NO), the above control is continued.

On the other hand, when it is determined that the refrigerant outlet temperature Tref is lower than the inlet-side water temperature Tin + tin1 (ST6: NO), the control unit 70 determines whether the refrigerant outlet temperature Tref is lower than the inlet-side water temperature Tin + tin2 (ST9).

When it is determined that the refrigerant outlet temperature Tref is lower than the inlet-side water temperature Tin + tin2 (ST9: YES), the control unit 70 performs control to reduce the flow rate regulated by the water feeding mechanism 60 (ST10). Then, until the flow rate control end signal is input (ST8: NO), the above control is continued.

When it is determined that the refrigerant outlet temperature Tref is higher than the inlet-side water temperature Tin + tin2 (ST9: NO), the above control is continued until the flow rate control end signal is input (ST8: NO).

Then, when the flow rate control end signal is input (ST8: YES), the flow rate control is finished.

When the standard mode signal is not present (ST3: NO), a shift to the flowchart shown in Fig. 4 is made.

As shown in Fig. 4, the control unit 70 switches the first refrigerant flow passage switching valve 25 to the main gas cooler 31 side (ST 11).

The control unit 70 acquires a target hot water supply temperature set value Tg, a current outlet-side water temperature Tout detected by the outlet-side water temperature sensor 73, an inlet-side water temperature Tin detected by the inlet-side water temperature sensor 72, and a refrigerant outlet temperature Tref detected by the refrigerant temperature sensor 71 (ST12).

The control unit 70 determines whether the refrigerant outlet temperature Tref is higher than the inlet-side water temperature Tin + tin1 (ST13).

When it is determined that the refrigerant outlet temperature Tref is higher than the inlet-side water temperature Tin + tin1 (ST13: YES), the control unit 70 performs control to increase the flow rate regulated by the water feeding mechanism 60 (ST14).

Then, a return to step ST8 of Fig. 3 is made, and the above control is continued until the flow rate control end signal is input (ST8: NO).

On the other hand, when it is determined that the refrigerant outlet temperature Tref is lower than the inlet-side water temperature Tin + tin1 (ST13: NO), the control unit 70 determines whether the refrigerant outlet temperature Tref is lower than the inlet-side water temperature Tin + tin2 (ST15).

When it is determined that the refrigerant outlet temperature Tref is lower than the inlet-side water temperature Tin + tin2 (ST15: YES), the control unit 70 performs control to reduce the flow rate regulated by the water feeding mechanism 60 (ST16). Then, a return to step ST8 of Fig. 3 is made, and the above control is continued until the flow rate control end signal is input (ST8: NO).

When it is determined that the refrigerant outlet temperature Tref is higher than the inlet-side water temperature Tin + tin2 (ST15: NO), the control unit 70 determines whether the outlet-side water temperature Tout is higher than the target hot water supply temperature set value Tg + tg (ST17).

When it is determined that the outlet-side water temperature Tout is higher than the target hot water supply temperature set value Tg + tg (ST17: YES), the control unit 70 performs control to increase the flow rate at the hot water supply side of the first flow regulating valve 61 (ST18). Then, a return to step ST8 of Fig. 3 is made, and the above control is continued until the flow rate control end signal is input (ST8: NO).

When it is determined that the outlet-side water temperature Tout is lower than the target hot water supply temperature set value Tg + tg (ST17: NO), the control unit 70 determines whether the outlet-side water temperature Tout is lower than the target hot water supply temperature set value Tg - tg (ST19).

When it is determined that the outlet-side water temperature Tout is lower than the target hot water supply temperature set value Tg - tg (ST19: YES), the control unit 70 performs control to reduce the flow rate at the hot water supply side of the first flow regulating valve 61 (ST20).

When it is determined that the outlet-side water temperature Tout is higher than the target hot water supply temperature set value Tg - tg (ST19: NO), a return to step ST8 of Fig. 3 is made, and the above control is continued until the flow rate control end signal is input (ST8: NO).

Then, when the flow rate control end signal is input (ST8: YES), the flow rate control is finished.

As described above, in the first embodiment, the refrigeration apparatus 1 includes the intercooler 30 which cools the refrigerant discharged from the low-stage compression mechanism 11, the main gas cooler 31 which cools the refrigerant discharged from the high-stage compression mechanism 12, the auxiliary gas cooler 32 which cools the refrigerant that has passed through the main gas cooler 31, the first refrigerant flow passage switching valve 25 which is disposed between the high-stage compression mechanism 12 and the main gas cooler 31, the first refrigerant merging point 26 which is disposed between the main gas cooler 31 and the auxiliary gas cooler 32, and the refrigerant bypass pipe 27 which connects the first refrigerant flow passage switching valve 25 and the first refrigerant merging point 26.

With this configuration, the high-temperature refrigerant does not flow into the main gas cooler 31 by switching the first refrigerant flow passage switching valve 25 to the refrigerant bypass pipe 27 side in the standard mode which does not perform hot water supply, thereby making it possible to prevent a rise in the water temperature inside the main gas cooler 31. Thus, since the water temperature inside the main gas cooler 31 does not rise, the temperature of hot water to be supplied when switching to the hot water supply mode is made becomes low, which eliminates the risk of burns.

In the present embodiment, the water pipe 50 includes the first water pipe 51,the first branch point 52 where the first water pipe 51 branches midway, the first merging point 53, the second water pipe 54 which connects the first branch point 52 and the first merging point 53 through the auxiliary gas cooler 32, the third water pipe 55 which connects the first branch point 52 and the first merging point 53 through the intercooler 30 without merging with the second water pipe 54, the fourth water pipe 56 which connects the first merging point 53 and the main gas cooler 31, the hot water supply pipe 57 which connects the main gas cooler 31 and the hot water supply destination, the drain pipe 58 which is connected to the fourth water pipe 56, the water feeding mechanism 60 which is disposed in the midway part of the water pipe 50, the first flow regulating valve 61 which regulates the flow rate of water flowing to the main gas cooler 31 and the drain pipe 58, and the control unit 70 which controls the first flow regulating valve 61.

With this configuration, it is possible to feed water to the auxiliary gas cooler 32 and the intercooler 30 in parallel, and water that has passed through the auxiliary gas cooler 32 and water that has passed through the intercooler 30 merge again and flow to the main gas cooler 31. Thus, a water passage that is the same as a water passage of a conventional refrigeration apparatus can be formed in the standard mode by providing the first flow regulating valve 61 upstream of the main gas cooler 31. Furthermore, in the standard mode, the refrigeration capacity and efficiency are not reduced and water pressure loss can be reduced.

In the present embodiment, the refrigeration apparatus 1 further includes the external heat radiator 80 which is connected to the drain pipe 58, the second merging point 82 which is disposed on the first water pipe 51, and the fifth water pipe 81 which connects the external heat radiator 80 and the second merging point 82.

With this configuration, the external heat radiator 80 enables water cooled by the external heat radiator 80 to be fed to the auxiliary gas cooler 32 and the intercooler 30, which makes it possible to reuse water without discarding it and operate the refrigeration apparatus 1 with a reduced amount of water.

Next, a second embodiment of the present invention will be described.

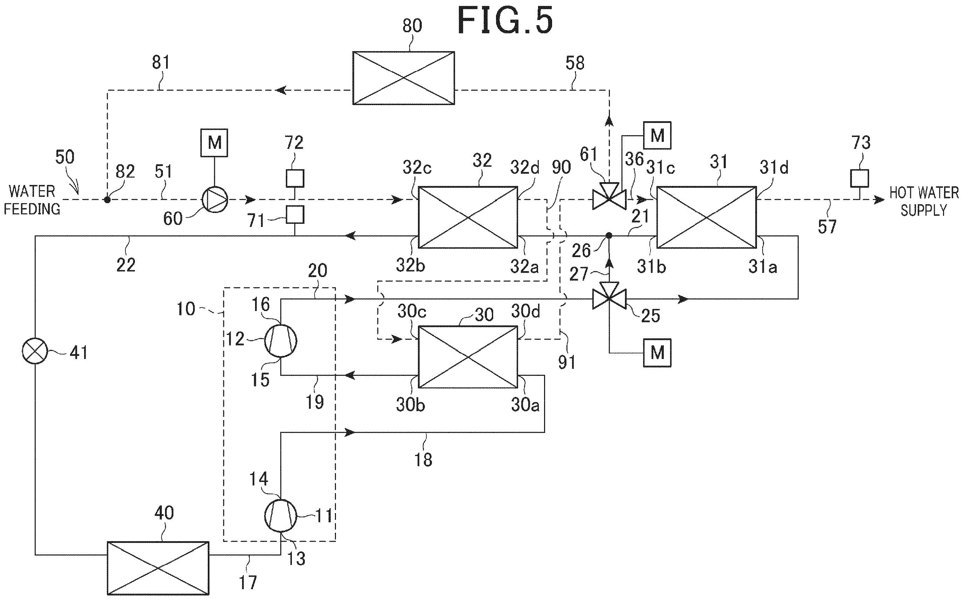

Fig. 5 is a refrigerant circuit diagram of a refrigeration apparatus according to the second embodiment of the present invention.

As shown in Fig. 5, in the present embodiment, a water pipe 50 includes a first water pipe 51 which is connected to an auxiliary gas cooler 32, a sixth water pipe 90 which connects the auxiliary gas cooler 32 and an intercooler 30, a seventh water pipe 91 which connects the intercooler 30 and a main gas cooler 31, a hot water supply pipe 57 which connects the main gas cooler 31 and a hot water supply destination, and a drain pipe 58 which is connected to the seventh water pipe 91.

The other configurations are similar to those of the first embodiment. Thus, identical parts are designated by the same reference signs to omit redundant description.

Furthermore, since control of the water feeding mechanism 60 and the first flow regulating valve 61 is also similar to that of the first embodiment, description thereof will be omitted.

In the present embodiment, the water pipe 50 includes the first water pipe 51, the sixth water pipe 90, and the seventh water pipe 91, thereby connecting the auxiliary gas cooler 32, the intercooler 30, and the main gas cooler 31 in series.

Such connection allows water inside the water pipe 50 to be supplied to the auxiliary gas cooler 32 in which the refrigerant temperature is low, the intercooler 30, and the main gas cooler 31 in this order. Thus, it is possible to perform heat exchange between the refrigerant and water with high efficiency. Even when the hot water supply temperature is increased, a reduction in the flow rate of hot water supply can be reduced. Furthermore, since sufficient heat dissipation of the refrigerant can be performed in the intercooler 30, the auxiliary gas cooler 32, and the main gas cooler 31, the refrigerant temperature at the outlet side of the refrigeration apparatus 1 is also reduced, and the refrigeration capacity of the refrigeration apparatus 1 can thus be maintained.

Furthermore, the first flow regulating valve 61 provided for the main gas cooler 31 prevents water from flowing to the main gas cooler 31 which is unnecessary in the standard mode, and the water pressure loss can thus also be reduced.

As described above, in the present embodiment, the water pipe 50 includes the first water pipe 51 which is connected to the auxiliary gas cooler 32, the sixth water pipe 90 which connects the auxiliary gas cooler 32 and the intercooler 30, the seventh water pipe 91 which connects the intercooler 30 and the main gas cooler 31, the hot water supply pipe 57 which connects the main gas cooler 31 and the hot water supply destination, and the drain pipe 58 which is connected to the seventh water pipe 91.

With this configuration, it is possible to increase the hot water supply temperature by feeding water to the auxiliary gas cooler 32, the intercooler 30, and the main gas cooler 31 in this order. Furthermore, the first flow regulating valve provided for the main gas cooler 31 prevents water from flowing to the main gas cooler 31 which is unnecessary in the standard mode, and the water pressure loss can thus also be reduced.

Note that the present invention is not limited to the above embodiments and can be modified in various manners without departing from the gist of the present invention.

As described above, the refrigeration apparatus according to the present invention is suitably usable as a refrigeration apparatus that switches an operation mode according to whether hot water supply is performed or not and is capable of maintaining the refrigeration capacity even when a hot water supply temperature is increased. Furthermore, the refrigeration apparatus according to the present invention is also suitably usable for hot water supply using hot water generated by heat exchange between a refrigerant and water, hot water supply used for, for example, hot water heating, and a hot water heating apparatus. Reference Signs List
- 1: refrigeration apparatus
- 10: compressor
- 11: low-stage compression mechanism
- 12: high-stage compression mechanism
- 13: low-stage suction port
- 14: low-stage discharge port
- 15: high-stage suction port
- 16: high-stage discharge port
- 17: low-pressure refrigerant pipe
- 18: intermediate-pressure discharge pipe
- 19: intermediate-pressure suction pipe
- 20: high-pressure discharge pipe
- 21: refrigerant pipe
- 22: refrigerant pipe
- 25: first refrigerant flow passage switching valve
- 26: first refrigerant merging point
- 27: refrigerant bypass pipe
- 30: intercooler
- 31: main gas cooler
- 32: auxiliary gas cooler
- 40: evaporator
- 41: expansion mechanism
- 50: water pipe
- 51: first water pipe
- 52: first branch point
- 53: first merging point
- 54: second water pipe
- 55: third water pipe
- 56: fourth water pipe
- 57: hot water supply pipe
- 58: drain pipe
- 60: water feeding mechanism
- 61: first flow regulating valve
- 70: control unit
- 71: refrigerant temperature sensor
- 72: inlet-side water temperature sensor
- 73: outlet-side water temperature sensor
- 80: external heat radiator
- 81: fifth water pipe
- 82: second merging point
- 90: sixth water pipe
- 91: seventh water pipe

## Claims

1. A refrigeration apparatus configured to cool a refrigerant by heat exchange between the refrigerant and water, the refrigeration apparatus **characterized by** comprising:
a low-stage compression mechanism (11);
a high-stage compression mechanism (12);
an expansion mechanism (41);
an evaporator (40);
a water pipe (50) constituting a flow passage of water for cooling the refrigerant;
an intercooler (30) configured to cool the refrigerant discharged from the low-stage compression mechanism;
a main gas cooler (31) configured to cool the refrigerant discharged from the high-stage compression mechanism;
an auxiliary gas cooler (32) configured to cool the refrigerant that has passed through the main gas cooler;
a first refrigerant flow passage switching mechanism disposed between the high-stage compression mechanism and the main gas cooler;
a first refrigerant merging point (26) disposed between the main gas cooler and the auxiliary gas cooler; and
a refrigerant bypass pipe (27) connecting the first refrigerant flow passage switching mechanism and the first refrigerant merging point.

2. The refrigeration apparatus according to claim 1, wherein the water pipe includes:
a first water pipe (51);
a first branch point (52) where the first water pipe branches midway;
a first merging point (53);
a second water pipe (54) connecting the first branch point and the first merging point through the auxiliary gas cooler;
a third water pipe (55) connecting the first branch point and the first merging point through the intercooler without merging with the second water pipe;
a fourth water pipe (56) connecting the first merging point and the main gas cooler;
a hot water supply pipe (57) connecting the main gas cooler and a hot water supply destination;
a drain pipe (58) connected to the fourth water pipe;
a water feeding mechanism (60) disposed in a midway part of the water pipe;
a first flow regulating mechanism configured to regulate a flow rate of water flowing to the main gas cooler and the drain pipe; and
a control unit (70) configured to control the first flow regulating mechanism.

3. The refrigeration apparatus according to claim 1, wherein the water pipe includes:
a first water pipe (51) connected to the auxiliary gas cooler;
a sixth water pipe (90) connecting the auxiliary gas cooler and the intercooler;
a seventh water pipe (91) connecting the intercooler and the main gas cooler;
a hot water supply pipe (57) connecting the main gas cooler and a hot water supply destination;
a drain pipe (58) connected to the seventh water pipe;
a water feeding mechanism (60) disposed in a midway part of the water pipe;
a first flow regulating mechanism configured to regulate a flow rate of water flowing to the main gas cooler and the drain pipe; and
a control unit (70) configured to control the first flow regulating mechanism.

4. The refrigeration apparatus according to claim 2 or 3, further comprising:
an external heat radiator (80) connected to the drain pipe;
a second water merging point disposed on the first water pipe; and
a fifth water pipe (81) connecting the external heat radiator and the second water merging point.
